# EUROPEAN PATENT SPECIFICATION

(11) **EP 0 972 400 B1**
(45) Date of publication and mention of the grant of the patent: **20.06.2001**
(21) Application number: 98914187.4
(22) Date of filing: 20.03.1998
(51) Int. Cl.: H04M 7/00

(54) **METHOD AND ARRANGEMENT FOR CONNECTION OF A COMPUTER TO A TELEPHONE EXCHANGE VIA THE INTERNET IN ORDER TO SET UP A TELEPHONE CONNECTION**
VERFAHREN UND ANORDNUNG FÜR DIE VERBINDUNG EINES COMPUTERS AN EINER FERNSPRECH-VERMITTLUNGSANLAGE ÜBER INTERNET UM EINE FERNSPRECHVERBINDUNG AUFZUBAUEN
DISPOSITIF ET SYSTEME PERMETTANT LA CONNEXION D'UN ORDINATEUR A UN CENTRAL TELEPHONIQUE VIA L'INTERNET AFIN D'ETABLIR UNE COMMUNICATION TELEPHONIQUE

(30) Priority: 31.03.1997 US 829281
(43) Date of publication of application: 19.01.2000
(73) Proprietor: TELEFONAKTIEBOLAGET L M ERICSSON (publ), 126 25 Stockholm (SE)
(72) Inventor: ANDREASON, Tomas, S-135 40 Tyresö (SE)
(74) Representative: Wideberg, Olle Sven
(86) International application number: SE9800511
(87) International publication number: WO9844713

(56) References cited:
- EP-A- 0 696 124
- EP-A- 0 721 266
- WO-A-96/38018
- DE-A- 19 508 076
- US-A- 5 604 737
- LOW C: "THE INTERNET TELEPHONY RED HERRING" HP LABORATORIES TECHNICAL REPORT, 15 May 1996, pages 1-15, XP002043901
- SAUNDERS S: "PBXS AND DATA: THE SECOND TIME AROUND" DATA COMMUNICATIONS, vol. 22, no. 9, 1 June 1993, pages 69, 70, 72-74, XP000322100

## Description

### TECHNICAL FIELD

The present invention relates to the connection of a computer to a telephone exchange for voice transmission purposes and more particularly to the use of the computer for simultaneous Internet access and voice telephone access to the telephone exchange.

### STATE OF THE ART

Computer networks in the form of internet and intranets are in widespread use and the possibility of transmitting voice over computer networks such as the internet has become more and more popular because of the low price on using the internet.

There exists however a problem in that people who sit at home and are connected to computer networks like internet can often be connected via their telephone connection and a modem. In this way the telephone is blocked if they only have one subscription. Many companies do spread out on the internet today and there is a growing number of advertisements on the internet. There is however a problem for the user of a computer to call such a company to get further information about such advertisements or to place orders via the telephone, since the telephone line is occupied by the computer.

Many computers today are equipped with loudspeakers, microphones and software for using the computer as a telephone. Such types of software include Webphone and Cooltalk.

W096/20553 is mainly concerned with a system of transmitting voice mail and electronic mail messages in a computer network. It does also describe setting up of telephone calls via the internet. It is however not concerned with receiving telephone calls from computers via a computer network.

In a Brochure "An introduction to distributed multimedia networks", by Harvey Kaufman, Netspeak Corporation, it is described that a telephone call can be set up from a computer to an ACD center (Automatic Call Distribution) via a gateway. The ACD center might be incorporated into an exchange. It is said that the user need only click on an icon to start Webphone and initiate a call. The computer is here probably connected to this exchange via a modem, internet service providers, the internet and the public switched telephone network PSTN. The document does however not mention how the call is set up between the computer and the ACD center.

The telecommunications standard ITU-T H.323 describes different protocols for conversion of speech to data packets in a gateway and vice versa for use in communication between computers and telephone equipment.

Swedish patent application no SE 9602212-4, filed 4 June 1996, discloses an exchange in a telecommunication network to which a computer is connected via a modem. Calls made to the telephone number associated with the modem are re-routed to a telephone server, for compression, packing into packets and contacting of the computer via internet. The connection between the exchange and the computer is a telephone connection. In this case telephone signals are packed into data packets that are then sent on a normal telephone line.

Swedish patent application SE 9604409-4 filed 29 November 1996 discloses a modem which multiplexes telephone signals and data packets on a telephone line so that a user having his computer connected to the PSTN can talk on the telephone while at the same time using the computer via this sole telephone connection. The U.S. patent No. 5,604,737 discloses a communication system including a public network connected to a LAN computer network via a communication server. A computer communication terminal connected to the LAN can have voice communication via the server to a telephone connected to the public network. When calling the user of the computer dials a common telephone number to a called subscriber. The computer then receives an address from the server and sends to this address, in a packet, a request for setting up a call to the communication server. The server then sets up the call to the called subscriber.

### SUMMARY OF THE INVENTION

People surf the internet with their computers to read about products. They may want to make a phone call to make inquiries about what they are reading, but they cannot, because their phone line is occupied by a modem connection required for the computer. If the exchange of the company they want to call could receive calls from the Internet, they could use common internet telephony software, such as Cooltalk in their computer to make the call without interrupting their Internet connection.

The present invention thus concerns a problem of how to set up a telephone connection for speech from a computer to an extension of an exchange via a computer network when the computer is connected to the computer network.

In a broad sense the problem is solved in the PBX (Private Branch Exchange) of a company. The PBX is arranged in such a way that a WEB surfing PC (Personal Computer) user, i.e. a user of a computer which is connected to the internet and collects information from different servers connected to the internet, can make a phone call from the PC to the PBX. A presumption is that the surfing PC is connected to a server of the company for reading their home page, which makes it possible for the company to connect the PBX.

This problem is solved by selecting, upon initiation of a telephone call from a computer, a first computer network address, sending the first address to the computer and setting up a connection between the exchange and the computer using the first address so that data packets containing telephony can be sent between the exchange and the computer.

The object of the invention is thus to obtain an exchange, a telephone system comprising such an exchange and a method for connecting a computer to the exchange which accomplishes the setting up a speech connection from the computer to an extension of the exchange, when the computer is provided with a telephone function.

This object is achieved by a method comprising the steps of:
initiating, from the computer, a telephone call to the exchange;
selecting, in the exchange, a first computer network address,
returning the first address to the computer,
setting up a connection between the exchange and the computer using the first address of the exchange and the address of the computer, and
handling, in the exchange, the interface between data packets and a stream of telephone signals for the call between the computer and an extension of the exchange.

This object is also accomplished with the use of an exchange and a telephone system comprising such an exchange and a server. The server is arranged to receive a service request from said computer via the computer network, to send a demand for a computer network address to the exchange, to receive a first address to be used by the computer from the exchange and to send said first address to the computer. The exchange comprises means for selecting network addresses in order to select said first computer network address, at least one signal processing means arranged to return the first address to the computer and means for setting up a connection with the computer using the first address of the exchange and the address of the computer. The signal processing means further handles the interface between data packets and a stream of telephone signals for a call between the computer and an extension of the exchange.

The advantage of the invention is that a user of a computer can place outgoing telephone calls while at the same time being connected to the internet. It is also very advantageous for companies having an exchange according to the invention to easily allow internet telephone calls to their own extensions without having to disconnect the internet connection so that prospective customers are not lost.

A further advantage is that a user of a computer can call an extension without having to place the call via a gateway.

Further advantages are that the computer can call group numbers as well as separate extension numbers. The user of the computer can also make clear where he wants to call independently of technical infrastructure and can reach all numbers in an exchange.

The invention will now be described in more detail with reference to preferred embodiments and to the enclosed drawings.

### BRIEF DESCRIPTION OF THE DRAWINGS

Fig. 1 shows a block schematic of a telephone exchange according to the invention connected to a computer via a computer network,
fig. 2 shows a block schematic of a computer network connection device in the exchange according to the invention,
fig. 3 shows a flow chart of a method for choosing addresses for connecting the computer to the exchange,
fig. 4 shows a flow chart of a method used by the exchange for setting up a telephone connection between the computer and the exchange as well as for sending telephone signals to the exchange from the computer,
fig. 5 shows a flow chart of a method used by the exchange for sending telephone signals to the computer and
fig. 6 shows a more detailed block schematic of the local control means 20.

### DETAILED DESCRIPTION OF PREFERRED EMBODIMENTS

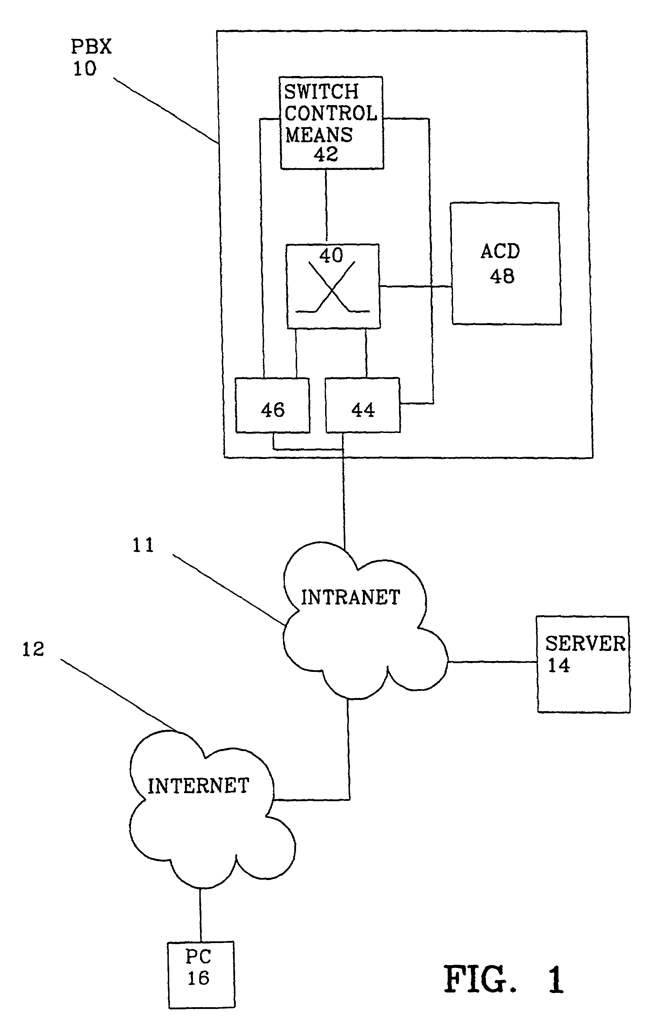

In fig. 1 is shown a telephone system according to the invention comprising a telephone exchange PBX 10, for example in the form of private branch exchange, which is connected to a computer PC 16 via a computer network 11 and 12, which network is, in this embodiment, an intranet 11 connected to the internet 12. A company server 14 is connected to the intranet 11.

The exchange PBX 10 comprises a switch control means 42 connected to a switch core 40 and to a first network connection device 44 and a second network connection device 46, where the network connection devices 44 and 46 are each connected between the switch core 40 and the computer network 11 and 12. The switch core 40 is also connected to an ACD (Automatic Call Distribution) center 48. The ACD center is actually an integrated part of the exchange in that it comprises a special ACD program in the switch control means for routing calls to a number of extensions in the exchange. It is here shown as a separate entity of the exchange for better understanding of the invention. An ACD center is a center that distributes incoming calls to agents of a company, which agents can be sales persons.

How an ACD center works is something that is well known within the art. The ACD center could also be replaced by a single extension of the exchange or an operator of the exchange, but reference will in the following only be made to the ACD center 48 for the purposes of the description.

The exchange 10 can comprise several network connection devices 44 and 46, where each could handle incoming telephone calls from several computers. The main part of the description and the figures will however only be limited to the first and second network connection device 44 and 46 for simplicity. The server 14 may also be incorporated into the exchange and can in fact also be incorporated in one of the network connection devices.

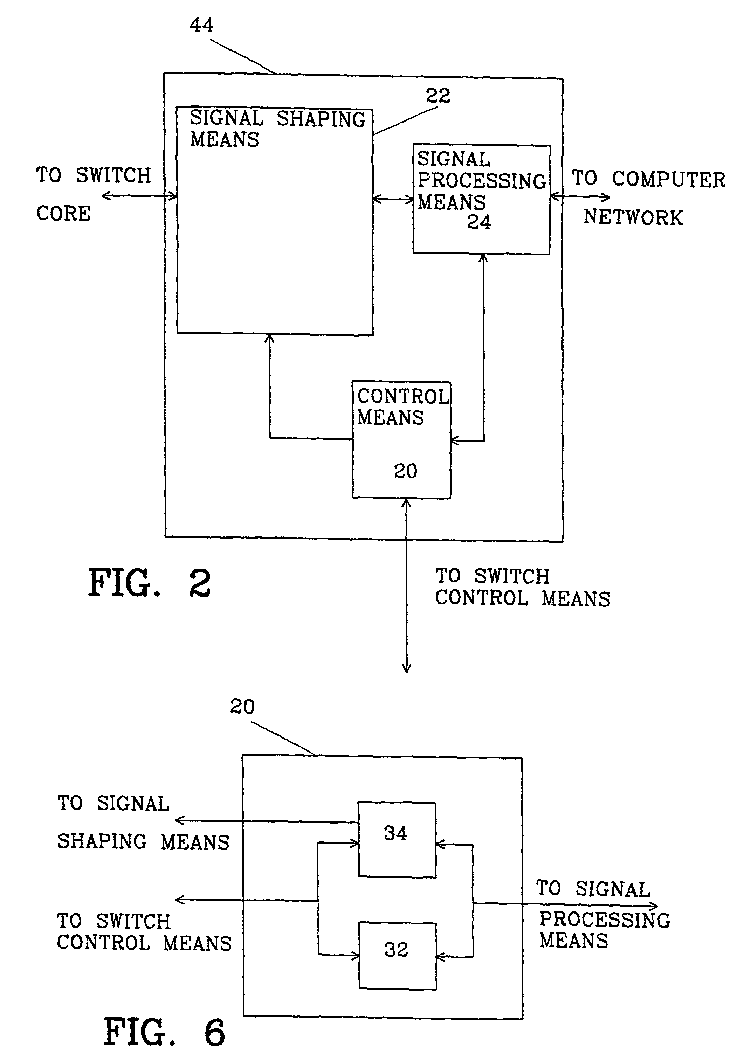

In fig. 2 is shown a network connection device 44 according to the invention. The network connection device 44 comprises a signal shaping means 22 connected to the switch core of the exchange, a signal processing means 24 connected between the signal shaping means and the computer network 11 and 12 and a local control means 20 connected to the switch control means as well as to the signal shaping means 22 and the signal processing means 24. The signal processing means 24 has as its object to handle the interface between data packets on the computer network and streams of telephone signals inside the exchange. The network connection device 44 is preferably realised in the form of a processor having various memories and registers connected to it. The network connection device could also comprise several signal shaping means 22, but only one is shown for simplicity.

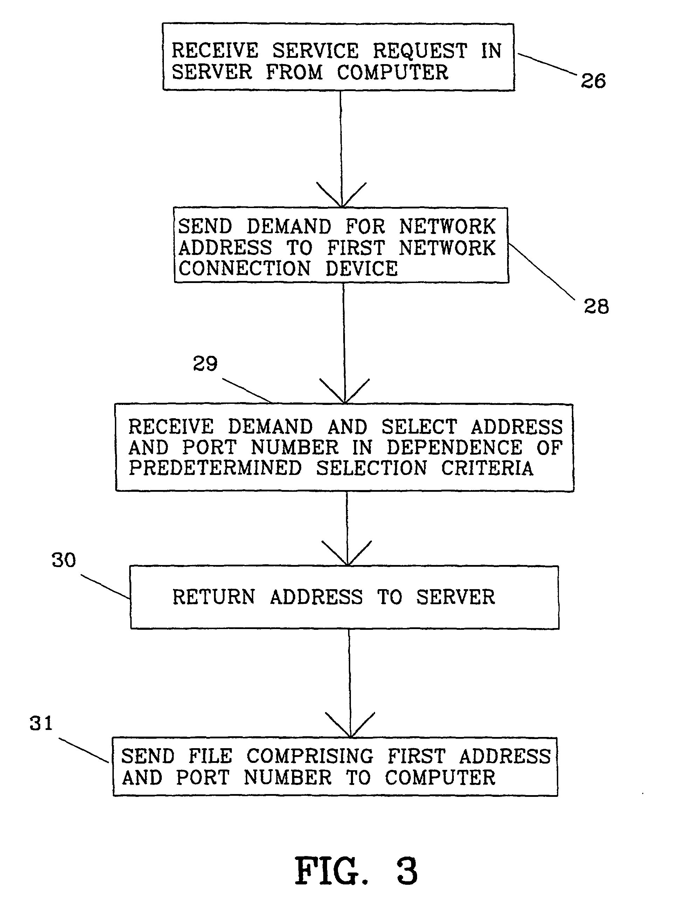

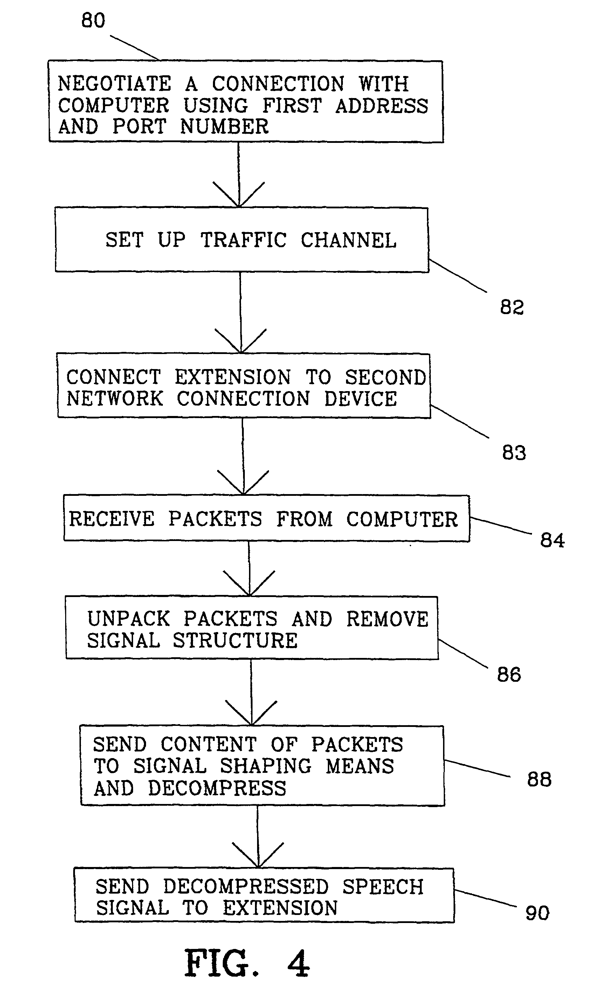

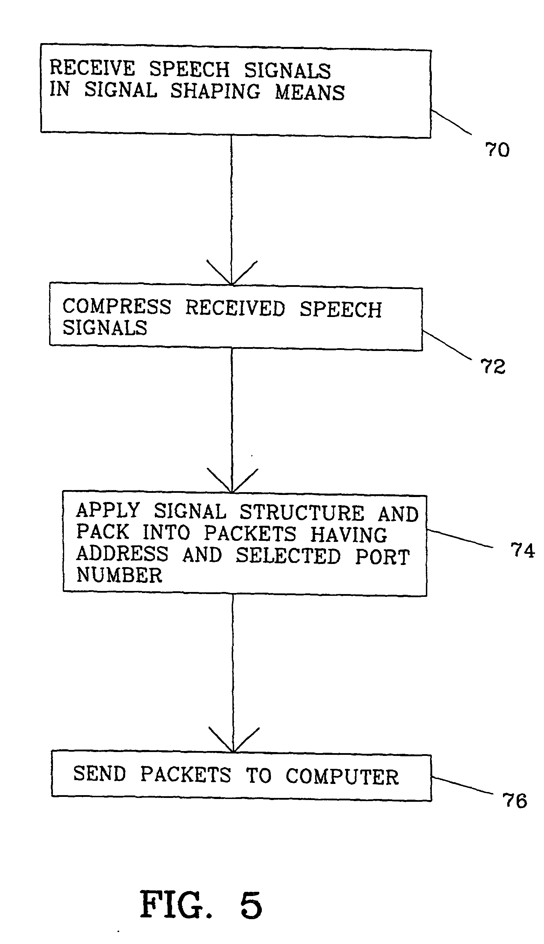

Fig. 3 shows a flow chart of the method followed when selecting a network address and a port number to be used by the computer when later setting up a telephone connection, fig. 4 shows a flow chart of a method of setting up a call and receiving packets from the computer in the exchange and fig. 5 shows a flow chart of a method of sending packets to the computer from the exchange.

Fig. 6 shows a block schematic of a local control means 20, which comprises means for selecting network addresses 32 and means for setting up a connection 34. Both these means have connections to the signal processing means and the switch control means, while only the means 34 for setting up connections has a connection to the signal shaping means.

The selection of a network address to be used by the computer is now described with reference to fig. 1, 2, 3 and 6.

Initially a user of the computer 16 is out surfing on the internet 12. He has his computer connected to the internet via a modem and the public switched telephone network. His computer is here equipped with a suitable web browser for accessing the internet, such as for example Netscape. He has only one telephone subscription and can thus not use his normal telephone while surfing. The computer 16 is furthermore equipped with a telephone function such as Webphone, Cooltalk or some other function which can be based on for example the protocol H.323. While surfing he visits a home page of a company, which home page is available on the server 14. This company also owns the PBX 10. When looking at this home page, the user sees an advertisement for the sale of some goods at an exceptionally low price and he wants to call immediately because there are only a few articles left of the goods and he might otherwise miss this opportunity. The home page has a few icons that read: "If you want to call us using Webphone, click here" and "If you want to call us using Cooltalk click here" etc. for all different telephone functions that can be used together with the exchange. The user clicks on one of these icons, the one that corresponds to his special telephone function. By doing this he initiates a telephone call through sending a service request from the computer 16 to the server 14. The service request is sent using TCP/IP (Transmission Control Protocol/Internet Protocol) packets. This service request, which by selection of the icon includes a destination name, is then received by the server, procedural step 26, which in turn sends a demand for a network address to the first network connection device 44 in the exchange, also using TCP/IP packets, procedural step 28. This demand includes the destination name. The destination name indicates which extension or group of extensions the user of the computer wants to get in contact with and which type of telephone function the computer is equipped with. The first network connection device 44 receives this demand in the signal processing means 24, which signal processing means removes the signal structure (TCP) and forwards the content to the local control means 20.

The server 14 and the first network connection device 44 are here arranged to communicate with each other using preselected addresses and port numbers, so that the signal processing means 24 is set in advance to send the content of the packet with the demand to the local control means 20. The means for selecting network addresses 32 in the local control means 20 in the first network connection device 44 then selects a first network address and a port number to be used by the computer according to predetermined selection criteria, procedural step 29. The first address and port number are then forwarded to the signal processing means 24, which applies signal structure like for example TCP, packs first address and port number in at least one data packet and sends this packet to the server, procedural step 30. The server 14 then puts, after reception of the packet, the first address and the port number in a file, which file is sent to the computer 16 according to the protocol used and according to how the telephone program is to interact with the web browser, procedural step 31. Thereafter the computer can contact the exchange using the first address and the port number contained in the file in conventional fashion as specified by the telephone function used. It should here be mentioned that some telephone functions might not support the use of port numbers and then no port numbers would be sent, but only network addresses.

This selection of address is performed in the following way. The selection means 32 of the first network connection device 44, to which device all such service requests are sent, has a store comprising network addresses that can be used for communication with all network connection devices in the exchange. It then selects, from the store, an address not previously used and a port number to be used. The address is associated with a network connection device in the exchange. Each network connection device has a pool of addresses associated with it. The selection means 32 first selects the network connection device to which the computer will be connected. This selection is based upon the destination name used, the location of the extension with which contact is wanted and the load of the network connection devices in the exchange, i.e. how many computers are already connected to the network connection devices. It then selects one of the addresses in the pool of addresses for the selected network connection device. This address is the one that has been unused the longest time. In our example we assume that the second network connection device 46 is to be used. The selection means 32 then converts the destination name to an identity of the destination that the switch control means 42 recognises and forwards this identity with the chosen address and port number to the switch control means, which pairs the identity with the address and port number for later use. In our example the computer wanted to get in contact with the ACD center 48 and the identity of this center is paired with the first address, which is included in the pool of addresses associated with the second network connection device. The port number is chosen to be indicative of which type of telephony function the computer includes, so that the network connection device chosen immediately knows the type of telephone function included in the computer.

As an alternative each network connection device has a number of network addresses that are in advance associated with an extension. In that case the first network connection device pairs the extension with which contact is wanted by selecting the address. No pairing would then be necessary in the switch control means.

In yet another alternative there would be a pool of addresses common to all network connection devices. The first network connection device or the switch control means would then need to select a network connection device to pair with the address.

In yet another alternative the means for selecting addresses is arranged in the switch control means.

With reference to fig. 1, 2, 4 and 6 the setting up of a call between the computer and the wanted extension is now described. The computer has now received the first network address, which the telephone function recognises as another computer having the same function. The computer then starts to set up or negotiate a connection with the second network connection device 46 in the exchange using the first address and the port number as well as the network address of the computer, procedural step 80. The negotiating is performed according to a negotiating scheme supported by the telephone function in the computer and can be a scheme as defined in the ITU-T standard H.323. The signal processing means 24 is there arranged to receive data packets of the TCP/IP type, to remove the signal structure, i.e. TCP and to forward the contents to the means for setting up a connection 34 in the local control means 20. The means 34 has, because of the port number, selected the same type of telephone function that the computer uses and applies this function for setting up a connection i.e. Cooltalk, Webphone or some software based on standard H.323 etc. During this negotiating a traffic channel to be used is decided, which channel can be set up using the same computer network address and the same port number or a different address and a different port number as is used for this negotiating or the same address and a different port number. Thereafter the traffic channel is set up using the selected traffic channel address and port number, procedural step 82. The address and port number chosen for sending packets in the traffic channel to the computer is decided by the telephone function used in the computer and by the type of negotiating scheme used.

The means 34 then selects a signal shaping means 22, which is to decompress signals received from the computer, connects the chosen signal shaping means 22 to the signal processing means 24 and sets the signal shaping means to decompress received telephone signal according to an algorithm decided by the telephone function of the computer and sets the signal processing means to remove a signal structure suitable for telephony over the computer network UDP/IP (Unreliable Datagram Protocol/Internet Protocol) from data packets received from the computer having the traffic channel address and port number.

Thereafter the extension 48 is connected to the selected signal shaping means 22 via the switch core 40, procedural step 83. This is achieved by the switch control means 42 being informed by the local control means 20 of which signal shaping means 22 is associated with the first address, and the switch control means therefore connects the wanted extension to said signal shaping means 22 in conventional telephone exchange fashion in dependence of above mentioned pairing. Thereby a call has been set up.

The computer then processes speech signals to be sent from the computer to the exchange PBX, applies a signal structure like UDP/IP (Unreliable Datagram Protocol/Internet Protocol) and packs them into data packets having the traffic channel address and port number. The computer then sends these data packets to the computer network 11 and 12. The second network connection device 46 in the exchange PBX receives these packets, procedural step 84. The signal processing means 24 then unpacks the packets and removes the signal structure, procedural step 86. The content of the packets are then forwarded to the selected signal shaping means 22. The signal shaping means 22 decompresses the content of the packets in order to obtain a stream of telephone signals having a structure suitable for switching in the switch core, procedural step 88. The structure suitable for switching is normally in the form of eight bits. The decompression comprises changing the bit rate of the signals according to a suitable decompression algorithm supported by the telephone function. One decompression algorithm that might be used is the LD-CELP algorithm according to ITU-T standard G.728. The decompressed speech signals are then connected through the switch core to the ACD center 48, procedural step 90, where they are received by an agent, and thus a speech connection is set up. In this way the user can place his order via his computer.

There is also traffic going in the opposite direction in dependence of said negotiating and the procedure followed then is shown in the flow chart in fig. 5 and will be described with reference to fig. 1, 2 and 5.

After said negotiating and setting up of a connection, the selected signal shaping means 22 in the second network connection device 46 starts to receive speech signals from the ACD center 48, procedural step 70. The received signals, which are in the form of a stream of telephone signals, are compressed in the signal shaping means, procedural step 72, which compressed signals are then forwarded to the signal processing means 24. The compression is of course performed according to the compression algorithm defined by the telephone function in the computer. One that might be used is again LD-CELP. The signal processing means 24 then applies the signal structure suitable for telephony over the computer network UDP and packs these signals having this structure into packets having the IP or computer network address of the computer and a port number selected during the negotiation, procedural step 74. These packets are thereafter sent to the computer via the computer network, procedural step 76.

When the conversation is finished, the call is terminated in conventional fashion.

The switch control means is optionally provided with a further function. The computer network address of the computer as well as information of which telephone function it contains can be stored in a special store as an extension number, which can be used later for directly setting up a telephone call from an extension of the exchange and the computer or can be used to display at the extension called up so that the agent can see that an internet address is calling and what address that is. Such information should however only be stored in the store for a limited time after the original call has been terminated. The network address can be converted to a telephone number indicating the computer. In this way the normal logging and surveillance functions of the exchange can be applied for the computer.

As an alternative to the second network connection device knowing in advance about the type of telephone function used by the computer, it can be arranged to listen to and identify the protocols used in packets sent to it and in dependence of that select which telephone function is to be used.

During all the previously described activities the switch control means in the exchange is monitoring the functioning of the network connection device. This monitoring is performed by controlling the network addresses and port numbers used. It is very convenient to incorporate these monitoring possibilities into the normal monitoring functions of the switch control means. In this respect it is advantageous if the network connection devices appear to the switch control means as devices connected to a trunk line, which makes the monitoring easier to integrate with other monitoring functions of the exchange. Other monitoring functions incorporated into the switch control means are logging of problems on the computer network that disrupts the telecommunication traffic such as not receiving packets and generation of alarms if these problems reach a certain level. Examples of this are if a number of packets not received during a period of time are equal to a certain amount of packets, the number of distorted packets are higher than a certain level etc. Other functions are keeping of statistics of the quality like lost packets, failed connections etc. The software in the local control means can be updated at the same time as when other software in the exchange is updated and back up copies are made of it at the same time and using the same means.

With the present invention an exchange and a telephone system incorporating an exchange and a server is provided, where computers connected to the internet can directly be connected to the exchange for setting up telephone calls.

The invention is of course not limited to the embodiments described above and shown in the drawings but can be modified within the scope of the enclosed claims.

## Claims

1. Method of connecting at east one computer (16) to a telephone exchange (10) via a computer network (11,12) when the computer is connected to said computer network in order to set up a telephone connection between the exchange and the computer, where the computer includes means for processing speech in real time to function as a telephone and has a computer network address, characterised in that the method comprises the steps of:
initiating (26) a telephone call from the computer (16) to a server (14) connected to the computer network (11), which server accesses the telephone exchange via the computer network;
selecting (29), in the exchange, a first computer network address for the exchange;
returning (30) the first address from the exchange (10) via the server (14) to the computer (16) ;
setting up (31) a connection between the exchange and the computer using the first address of the exchange as destination for the call setup request and using the address of the computer (16) as traffic channel address; and
handling, in the exchange (10) an interface (24) to the computer network (11,12), the interface converting data packets and a stream of telephone signals for the call between the computer and an extension of the exchange (10), said step of handling comprises receiving, in the exchange and from the computer (16), data packets containing telephony and having the first address and removing a signal structure suitable for telephony over the computer network (11,12) from the content of the data packets, for sending telephone signals from the computer (16) to the exchange (10), as well as applying a signal structure suitable for telephony over the computer network to a stream of speech signals intended for the computer in order to produce data packets containing telephony, which signal structure is recognised by the computer (16), and sending the data packets containing telephony to the computer using the network address of the computer for sending telephone signals from the exchange (10) to the computer (16).

2. Method according to claim 1, wherein the step of initiating (26) comprises receiving, in the server (14) on the computer network (11,12), a service request from said computer (16) via the computer network and sending a demand (28) for a computer network address from the server (14) to the exchange (10) and wherein the step of returning (30) the first address comprises sending the first address from the exchange to the computer via the server.

3. Method according to claim 2, wherein the service request (26) comprises a destination name and the selecting is performed according to predetermined selection criteria comprising the destination name, the location of the extension to be connected to, the number of other computers connected to the exchange and addresses not used for a long time.

4. Method according to claim 1, wherein the step of applying (74) a signal structure is preceded by a step of compressing (72) the telephone signals to be sent.

5. Method according to claim 1, wherein the step of selecting (29) also comprises selecting a port number, which is returned to the computer (16) and used during the setting up of a connection.

6. Method according to claim 1, where the exchange (10) comprises a number of network connection devices (44,46) to which computers can be connected and wherein the step of selecting(29) comprises selecting the first address from a group of address associated with a network connection device in the exchange to which the telephone connection is set up.

7. Method according to claim 6, wherein the first address is directly associated with an extension or a group of extensions of the exchange (10) through an extension identity.

8. Method according to claim 1, where the exchange (10) comprises a number of network connection devices (44, 46) to which computers can be connected and wherein the step or selecting (29) the first address comprises selecting the first address from a group of address common to all network connection devices in the exchange and associating the first address with the network connection device (46) in the exchange (10) to which the telephone connection is set up.

9. Method according to claim 1, comprising the step of converting the computer network address of the computer (16) into a telephone number to be used for calling the computer.

10. Method according to claim 9, comprising the further step of storing the telephone number of the computer (16) for later use in calling the computer.

11. Method according to claim 1, comprising the further step of determining, in the exchange (10), a signal structure suitable for telephony over the computer network (11,12) used by the computer (16).

12. Telephone exchange (10) for setting up a telephone connection to at least one computer (16) via a computer network (11,12) to which the computer is connected, a network server (14) being connected to the computer network and the exchange comprising a switch core (40) and a switch control means (42) responsible for setting up connections between users of the exchange, where the computer (16) comprises means for processing speech in real time to function as a telephone and has a computer network address, **characterised** in that the exchange (10) comprises
means (32) for selecting network addresses upon initiation of a telephone call from the computer (16) to the server (14), which accesses the telephone exchange via the computer network (11, 12) in order to select a first computer network address with which telephone connection is to be set up;
at least one signal processing means (24) arranged to return the first address from the exchange (10) via the server to the computer (16); and
means (42) for setting up a connection with the computer using the first address of the exchange as destination for the call setup request and using the address of the computer (16) as traffic channel address;
wherein the signal processing means (24) is further arranged to handle an interface to the computer network (11, 12), the interface converting data packets and a stream of telephone signals for a call between the computer and an extension of the exchange, wherein the signal processing (24) means is also arranged, when handling the interface, to receive data packets from the computer (16) containing telephony and having said first address and to remove a signal structure suitable for telephony over the computer network (11,12) from the content of the data packets to produce a stream of speech signals for the extension, as well as to apply a signal structure suitable for telephony over the computer network (11,12) to a stream of speech signals intended for the computer (16) in order to produce data packets containing telephony, which signal structure is recognised by the computer; and to send the data packets containing telephony to the computer (16) using the computer network address of the computer.

13. Telephone exchange according to claim 12, wherein the signal processing means (24) is arranged to receive a demand for a computer network address to be used for a telephone connection with the computer (16) from the server (14) on the computer network (11,12), which server has received a service request from the computer (16), and to return the first address to the server, so that the server can send the first address to the computer.

14. Telephone exchange according to claim 13, wherein the demand comprises a destination name and the means for selecting network addresses (32) is arranged to select the first address according to predetermined selection criteria, which predetermined selection criteria comprise the destination name, the location of the extension to be connected to, the number of other computers connected to the exchange and addresses not used for a long time.

15. Telephone exchange according to claim 12, wherein the means for selecting network addresses (32) is also arranged to select a port number when selecting the first address, which is returned to the computer (16) and used during the setting up of a connection.

16. Telephone exchange according to claim 12, wherein the exchange (10) comprises at least two network connection devices (44,46), each comprising one signal processing means (24) and at least one signal shaping means (22), where the signal shaping means is connected between the switch core (40) and the signal processing means and is arranged to compress the telephone signals to be sent.

17. Telephone exchange according to claim 16, wherein the means for selecting a network address is arranged to select the first address from a group of addresses associated with a network connection device (46) in the exchange (10) to which the telephone connection is to be set up.

18. Telephone exchange (10) according to claim 17, wherein the switch control means (42) is arranged to associate the first address with an extension identity of an extension or a group of extensions in the exchange.

19. Telephone exchange according to claim 16, wherein the network connection device (44) with which the telephone connection is set up comprises an extension store including at least one identity of an extension or a group of extensions of the exchange (10), where each such extension identity is directly associated with a corresponding computer network address.

20. Telephone exchange according to claim 16, wherein the means for selecting (32) a network address is arranged to select the first address from a group of addresses common to all network connection devices (44,46) in the exchange (10) and to associate the first address with the network connection device in the exchange to which the telephone connection is to be set up.

21. Telephone exchange according to claim 16, wherein the network connection device (46) to which the computer (16) is to be connected comprises means for converting the computer network address of the computer into a telephone number to be used for calling the computer.

22. Telephone exchange (10) according to claim 21, wherein the means for converting the network address is arranged to forward the telephone number of the computer (16) to the switch control means (42), which in turn is arranged to store the telephone number of the computer for later use in calling the computer or for display at called extension.

23. Telephone exchange (10) according to claim 16, wherein the means for selecting (32) a network address comprises means for determining the signal structure suitable for telephony over the computer network (11,12) used by the computer (16), which means for selecting (32) network address is further arranged to inform the network connection device (44,46) to which the computer is to be connected of this structure.

24. Telephone exchange according to claim 12, wherein the means for selecting (34) network addresses is located in the switch control means (20).

25. Telephone exchange according to claim 16, wherein the means for selecting (34) network addresses is, located in one network connection ,device (44).

26. Telephone system for setting up telephone connections from at least one computer (16) to an exchange (10) via a computer network (11,12) and comprising a server (14) and a telephone exchange that comprises a switch core (40) and a switch control (42) means responsible for setting up connections between users of the exchange (10), where the computer comprises means for processing speech in real time to function as a telephone and has a computer network address;
**characterised** in that
the server (14) is arranged to receive a service request from said computer (16) via the computer network (11, 12), to send a demand for a computer network address to the exchange (10), to receive a first address to be used by the computer from the exchange and to send said first address to the computer 16);
the exchange (10) comprises
means for selecting (32) network addresses, in order to select said first computer network address with which the telephone connection is to be set up;
at least one signal processing means (24) arranged to return the first address to the computer (16); and
means for setting up a connection with the computer using the first address of the exchange and the address of the computer;
wherein the signal processing means (24) is further arranged to handle an interface to the computer network (11,12), the interface converting data packets and a stream of telephone signals for a call between the computer (16) and an extension of the exchange (10), wherein the signal processing means (24) is also arranged, when handling the interface, to receive data packets from the computer (16) containing telephony and having said first address and to remove a signal structure suitable for telephony over the computer network (11, 12) from the content of the data packets to produce a stream of speech signals for the extension, as well as to apply a signal structure suitable for telephony over the computer network (11,12) to a stream of speech signals intended for the computer (16) in order to produce data packets containing telephony, which signal structure is recognised by the computer; and to send the data packets containing telephony to the computer (16) using the computer network address of the computer.

## Patentansprüche

1. Verfahren zum Verbinden mindestens eines Computers (16) mit einer Telefonvermittlung (10) über ein Computernetz (11, 12), wenn der Computer mit dem Computernetz verbunden ist, zum Aufbauen einer Telefonverbindung zwischen der Vermittlungsstelle und dem Computer, derart, dass der Computer eine Vorrichtung zum Verarbeiten von Sprache in Echtzeit enthält, für eine Funktion als Telefon, und eine Computernetzadresse aufweist, dadurch gekennzeichnet, dass das Verfahren folgende Schritte enthält:
Initiieren (26) eines Telefonanrufs von dem Computer (16) zu einem Server (14), der mit dem Computernetz (11) verbunden ist, derart, dass der Server einen Zugriff auf die Telefonvermittlungsstelle über das Computernetz durchführt;
Auswählen (29) in der Vermittlungsstelle, einer ersten Computernetzadresse für die Vermittlungsstelle;
Rückgeben (30) der ersten Adresse von der Vermittlungsstelle (10) über den Server (14) zu dem Computer (16) ;
Aufbauen einer Verbindung zwischen der Vermittlungsstelle und dem Computer unter Verwendung der ersten Adresse der Vermittlungsstelle als Ziel für die Anrufaufbauanforderung unter Verwendung der Adresse des Computers (16) als Verkehrskanaladresse; und
Handhaben, in der Vermittlungsstelle (10), einer Schnittstelle (24) zu dem Computernetz (11, 12) derart, dass die Schnittstelle ein Umsetzen von Datenpaketen und einem Strom von Telefonsignalen für den Anruf bewirkt, zwischen dem Computer und einem Nebenanschluss der Vermittlungsstelle (10), und ferner der Schritt zum Handhaben enthält: Empfangen, in der Vermittlungsstelle und von dem Computer (16), von Datenpaketen mit Telefonie und mit der ersten Adresse und Entfernen einer Signalstruktur mit der Fähigkeit von Telefonie über das Computernetz (11, 12) von dem Inhalt der Datenpakete, für ein Senden der Telefonsignale von dem Computer (16) zu der Vermittlungsstelle (10), sowie Anwenden einer Signalstruktur mit der Fähigkeit für Telefonie über das Computernetz zu einem Strom von Sprachsignalen mit der Intention für den Computer zum Erzeugen von Datenpaketen mit Telefonie, derart, dass die Signalstruktur durch den Computer (16) erkannt wird, und Senden der Datenpakete mit der Telefonie zu dem Computer unter Verwenden der Netzadresse des Computers zum Senden der Telefonsignale von der Vermittlungsstelle (10) zu dem Computer (16).

2. Verfahren nach Anspruch 1, dadurch gekennzeichnet, dass der Schritt zum Initiieren (26) enthält: Empfangen, bei dem Server (16) an dem Computernetz (11, 12), einer Dienstanforderung von dem Computer (16) über das Computernetz und Senden einer Anforderung (28) für eine Computernetzadresse von dem Server (14) zu der Vermittlungsstelle (10) und derart, dass der Schritt zum Rückgeben (30) der ersten Adresse das Senden der ersten Adresse von der Vermittlungsstelle zu dem Computer über den Server umfasst.

3. Verfahren nach Anspruch 2, dadurch gekennzeichnet, dass die Diensanforderung (26) einen Zielnamen umfasst, und die Auswahl gemäß der vorgegebenen Auswahlkriterien durchgeführt wird, mit dem Zielnamen, dem Ort des Nebenanschlusses, zu dem eine Verbindung herzustellen ist, und die Zahl der anderen Computer, die mit der Vermittlungsstelle verbunden sind, und den während einer langen Zeit nicht verwendeten Adressen.

4. Verfahren nach Anspruch 1, dadurch gekennzeichnet, dass dem Schritt zum Anwenden (74) einer Signalstruktur ein Schritt zum Komprimieren (72) der zu sendenden Telefonsignale vorangeht.

5. Verfahren nach Anspruch 1, dadurch gekennzeichnet, dass der Schritt zum Auswählen (29) auch die Auswahl einer Anschlussnummer umfasst, die zu dem Computer (16) zurückgegeben wird und während dem Aufbau einer Verbindung verwendet wird.

6. Verfahren nach Anspruch 1, dadurch gekennzeichnet, dass die Vermittlungsstelle (10) eine Zahl von Netzverbindungseinrichtungen (44, 46) enthält, mit denen Computer verbunden werden können, und derart, dass der Schritt zum Auswählen (29) die Auswahl der ersten Adresse von einer Gruppe von Adressen in Zuordnung zu einer Netzverbindungseinrichtung in der Vermittlungsstelle, zu der die Telefonverbindung aufzubauen ist, umfasst.

7. Verfahren nach Anspruch 6, dadurch gekennzeichnet, dass die erste Adresse direkt ein Nebenanschluss oder einer Gruppe von Nebenanschlüssen in der Vermittlungsstelle (10) über eine Nebenanschlussidentität zugeordnet ist.

8. Verfahren nach Anspruch 1, dadurch gekennzeichnet, dass die Vermittlungsstelle (10) eine Zahl von Netzverbindungseinrichtungen (44, 46) enthält, zu denen sich Computer anschließen lassen, und derart, dass der Schritt zum Auswählen (29) der ersten Adresse das Auswählen der ersten Adresse von einer Gruppe von Adressen umfasst, die für alle Netzverbindungseinrichtungen in der Vermittlungsstelle gemeinsam vorliegen, sowie das Zuordnen der ersten Adresse mit der Netzverbindungseinrichtung (46) in der Vermittlungsstelle (10), zu der die Telefonverbindung aufzubauen ist.

9. Verfahren nach Anspruch 1, dadurch gekennzeichnet, dass es den Schritt zum Umsetzen der Computernetzadresse des Computers (16) in eine Telefonnummer umfasst, die zum Anrufen des Computers zu verwenden ist.

10. Verfahren nach Anspruch 9, dadurch gekennzeichnet, dass es ferner den Schritt zum Speichern der Telefonnummer des Computers (16) für eine spätere Anwendung beim Anrufen des Computers umfasst.

11. Verfahren nach Anspruch 1, dadurch gekennzeichnet, dass es ferner den Schritt zum Bestimmen, in der Vermittlungsstelle (10), einer Signalstruktur umfasst, die sich für eine Telefonie über das Computernetz (11, 12) eignet, das von dem Computer (16) verwendet wird.

12. Telefonvermittlungsstelle (10) zum Aufbauen einer Telefonverbindung zu mindestens einem Computer (16) über ein Computernetz (11, 12), mit dem der Computer verbunden ist, sowie einem Netzwerkserver (14), der mit dem Computernetz verbunden ist, und derart, dass die Vermittlungsstelle einen Schaltkern (40) und eine Schaltsteuervorrichtung (42) enthält, die zum Aufbauen von Verbindungen zwischen Anwendern der Vermittlungsstelle verantwortlich sind, derart, dass der Computer (16) eine Vorrichtung zum Verarbeiten von Sprachenechtzeit für die Funktion als Telefon enthält und eine Computernetzadresse aufweist, dadurch gekennzeichnet, dass die Vermittlungsstelle (10) enthält:
eine Vorrichtung (32) zum Auswählen von Netzadressen bei Initiierung eines Telefonanrufs von dem Computer (16) zu dem Server (14), derart, dass die Zugriffe zu der Telefonvermittlungsstelle über das Computernetz (11, 12) zum Auswählen einer ersten Computernetzadresse erfolgen, mit der die Telefonverbindung aufzubauen ist;
mindestens eine Signalverarbeitungsvorrichtung (24), ausgebildet zum Rückgeben der ersten Adresse von der Vermittlungsstelle (10) über den Server an den Computer (16); und
eine Vorrichtung (42) zum Aufbauen einer Verbindung mit dem Computer unter Verwendung der ersten Adresse von der Vermittlungsstelle als Ziel für die Anrufaufbauanforderung unter Verwendung der Adresse des Computers (16) als Verkehrskanaladresse; derart, dass
Signalverarbeitungsvorrichtung (24) ferner zum Handhaben einer Schnittstelle mit dem Computernetz (11, 12) ausgebildet ist, die Schnittstelle Datenpakete und einen Strom der Telefoniesignale für einen Anruf zwischen dem Computer und einem Nebenanschluss der Vermittlungsstelle umsetzt, und derart, dass die Signalverarbeitungsvorrichtung (24) auch ausgebildet ist, um während dem Handhaben der Schnittstelle, Datenpakete von dem Computer (16) mit Telefonie und mit der Adresse zu empfangen, sowie ferner eine Signalstruktur mit der Fähigkeit für Telefonie über das Computernetz (11, 12) von dem Inhalt der Datenpakete zu entfernen, zum Erzeugen eines Stroms von Sprachsignalen für den Nebenanschluss, sowie für das Anwenden einer Signalstruktur mit der Fähigkeit für Telefonie über das Computernetz (11, 12) zu einem Strom von Sprachsignalen mit der Zielsetzung für den Computer (16) zum Erzeugen von Datenpaketen mit Telefonie, derart, dass die Signalstruktur durch den Computer erkannt wird; und ferner zum Senden der Datenpakete mit Telefonie zu dem Computer (16) unter Verwendung der Computernetzadresse des Computers.

13. Telefonvermittlungsstelle nach Anspruch 12, dadurch gekennzeichnet, dass die Signalverarbeitungsvorrichtung (24) zum Empfangen einer Anforderung für eine Computernetzadresse ausgebildet ist, die für eine Telefonverbindung mit dem Computer (16) zu verwenden ist, und zwar von dem Server (14) an dem Computernetz (11, 12), derart, dass der Server eine Dienstanforderung von dem Computer (16) empfangen hat, und ferner zum Rückgeben der ersten Adresse an den Server, so dass der Server die erste Adresse an den Computer senden kann.

14. Telefonvermittlungsstelle nach Anspruch 13, dadurch gekennzeichnet, dass die Anforderung einen Zielnamen enthält, und dass die Vorrichtung zum Auswählen von Netzadressen (32) zum Auswählen der ersten Adresse gemäß vorgegebener Auswahlkriterien ausgebildet ist, und die vorgegebenen Auswahlkriterien den Zielnamen enthalten, sowie den Ort des Nebenanschlusses, zu dem eine Verbindung zu erfolgen hat, die Zahl der anderen Computer, die mit der Vermittlungsstelle verbunden sind, und die während einer langen Zeit nicht verwendeten Adressen.

15. Telefonvermittlungsstelle nach Anspruch 12, dadurch gekennzeichnet, dass die Vorrichtung zum Auswählen der Netzadressen (32) auch zum Auswählen einer Anschlussnummer dann ausgebildet ist, wenn die erste Adresse ausgewählt wird, die zu dem Computer (16) zurückgegeben und während dem Aufbau einer Verbindung verwendet wird.

16. Telefonvermittlungsstelle nach Anspruch 12, dadurch gekennzeichnet, dass die Vermittlungsstelle (11) mindestens zwei Netzverbindungseinrichtungen (44, 46) enthält, die jeweils eine Signalverarbeitungsvorrichtung (24) und mindestens eine Signalformgebungsvorrichtung (22) enthalten, derart, dass die Signalformgebungsvorrichtung zwischen dem Schaltkern (40) und der Signalverarbeitungsvorrichtung angeschlossen und zum Komprimieren der zu sendenden Telefonsignale ausgebildet ist.

17. Telefonvermittlungsstelle nach Anspruch 16, dadurch gekennzeichnet, dass die Vorrichtung zum Auswählen einer Netzadresse zum Auswählen der ersten Adresse ausgebildet ist, und zwar aus einer Gruppe von Adressen in Zuordnung zu einer Netzverbindungseinrichtung (46) in der Vermittlungsstelle (10), zu dem die Telefonverbindung aufzubauen ist.

18. Telefonvermittlungsstelle (10) nach Anspruch 17, dadurch gekennzeichnet, dass die Schaltvermittlungsvorrichtung (42) zum Zuordnen der ersten Adresse mit einer Nebenanschlussidentität eines Nebenanschlusses oder einer Gruppe von Nebenanschlüssen in der Vermittlungsstelle ausgebildet ist.

19. Telefonvermittlungsstelle nach Anspruch 16, dadurch gekennzeichnet, dass die Netzverbindungseinrichtung (44), mit der die Telefonverbindung aufzubauen ist, einen Nebenanschlussspeicher enthält, mit mindestens einer Identität eines Nebenanschlusses oder einer Gruppe von Nebenanschlüssen der Vermittlungsstelle (10), derart, dass jede derartige Nebenanschlussidentität direkt einer entsprechenden Computernetzadresse zugeordnet ist.

20. Telefonvermittlungsstelle nach Anspruch 16, dadurch gekennzeichnet, dass die Vorrichtung zum Auswählen (32) einer Netzadresse zum Auswählen der ersten Adresse von einer Gruppe von Adressen ausgebildet ist, die für alle Netzverbindungseinrichtungen (44, 46) in der Vermittlungsstelle (10) gemeinsam sind, und zum Zuordnen der ersten Adresse zu der Netzverbindungseinrichtung in der Vermittlungsstelle, zu der die Telefonverbindung aufzubauen ist.

21. Telefonvermittlungsstelle nach Anspruch 16, dadurch gekennzeichnet, dass die Netzverbindungseinrichtung (46), mit der der Computer (16) zu verbinden ist, eine Vorrichtung zum Umsetzen der Computernetzadresse des Computers in eine zum Anrufen des Computers zu verwendende Telefonnummer enthält.

22. Telefonvermittlungsstelle (10) nach Anspruch 21, dadurch gekennzeichnet, dass die Vorrichtung zum Umsetzen der Netzadresse zum Weiterleiten der Telefonnummer des Computers (16) an die Schaltsteuervorrichtung (42) ausgebildet ist, die wiederum zum Speichern der Telefonnummer des Computers für eine spätere Anwendung beim Anrufen des Computers oder für die Anzeige eines angerufenen Nebenanschlusses ausgebildet ist.

23. Telefonvermittlungsstelle (10) nach Anspruch 16, dadurch gekennzeichnet, dass die Vorrichtung zum Auswählen (42) einer Netzadresse eine Vorrichtung zum Bestimmen der Signalstruktur mit der Fähigkeit für Telefonie über das Computernetz (11, 12) - verwendet durch den Computer (16) - enthält, derart, dass die Vorrichtung zum Auswählen (32) der Netzadresse ferner zum Informieren der Netzverbindungseinrichtung (44, 46) dahingehend ausgebildet ist, mit der der Computer mit dieser Struktur zu verbinden ist.

24. Telefonvermittlungsstelle nach Anspruch 12, dadurch gekennzeichnet, dass die Vorrichtung zum Auswählen (34) von Netzadressen in der Schaltsteuervorrichtung (20) angeordnet ist.

25. Telefonvermittlungsstelle nach Anspruch 16, dadurch gekennzeichnet, dass die Vorrichtung zum Auswählen (34) von Netzadressen in einer Netzverbindungseinrichtung (44) angeordnet ist.

26. Telefonsystem zum Aufbauen von Telefonverbindungen von mindestens einem Computer (16) zu einer Vermittlungsstelle (10) über ein Computernetz (11, 12) mit einem Server (14) und einer Telefonvermittlungsstelle mit einem Vermittlungskern (40) und einer Vermittlungssteuervorrichtung (42) in Ansprechen auf den Aufbau von Verbindungen zwischen Anwendern in der Vermittlungsstelle (10), derart, dass der Computer eine Vorrichtung zum Verarbeiten von Sprache in Echtzeit für die Funktion als Telefon enthält und eine Computernetzadresse aufweist;
dadurch gekennzeichnet, dass
der Server (14) zum Empfangen einer Dienstanforderung vom Computer (16) über das Computernetz (11, 12) ausgebildet ist, sowie zum Senden einer Anforderung für eine Computernetzadresse zu der Vermittlungsstelle (10), zum Empfangen einer ersten durch den Computer zu verwendenden Adresse von der Vermittlungsstelle und zum Senden der ersten Adresse zu dem Computer (16); und
die Vermittlungsstelle (10) enthält
eine Vorrichtung (32) zum Auswählen von Netzadressen zum Auswählen der ersten Computernetzadresse, mit der die Telefonverbindung aufzubauen ist;
mindestens eine Signalverarbeitungsvorrichtung (24) ausgebildet zum Rückgeben der ersten Adresse an den Computer (16); und
eine Vorrichtung zum Aufbauen einer Verbindung mit dem Computer unter Verwendung der ersten Adresse der Vermittlungsstelle und der Adresse des Computers; derart, dass
die Signalverarbeitungsvorrichtung (24) ferner zum Handhaben einer Schnittstelle zu dem Computernetz (11, 12) ausgebildet ist, und die Schnittstelle zum Umsetzen von Datenpaketen und eines Stroms von Telefonsignalen für einen Anruf zwischen dem Computer (16) und einem Nebenanschluss der Vermittlungsstelle (10) ausgebildet ist, derart, dass die Signalverarbeitungsvorrichtung (24) während dem Handhaben der Schnittstelle auch zum Empfangen von Datenpaketen von dem Computer (16) mit Telefonie und der ersten Adresse ausgebildet ist, sowie zum Entfernen einer Signalstruktur mit der Fähigkeit für Telefonie über das Computernetz (11, 12) von dem Inhalt der Datenpakete zum Erzeugen eines Stroms von Sprachsignalen für den Nebenanschluss, sowie zum Anwenden einer Signalstruktur mit der Fähigkeit für Telefonie über das Computernetz (11, 12) bei einem Strom von Sprachsignalen mit der Zielsetzung zu dem Computer (16) zum Erzeugen von Datenpaketen mit Telefonie, derart, dass die Signalstruktur durch den Computer erkannt ist; sowie zum Senden der Datenpakete mit Telefonie zu dem Computer (16) unter Verwendung der Computernetzadresse des Computers.

## Revendications

1. Procédé de connexion d'au moins un ordinateur (16) à un central téléphonique (10) par l'intermédiaire d'un réseau informatique (11, 12) lorsque l'ordinateur est connecté audit réseau informatique afin d'établir une connexion téléphonique entre le central téléphonique et l'ordinateur, l'ordinateur comportant des moyens pour traiter la parole en temps réel afin de fonctionner en tant que téléphone et comportant une adresse de réseau informatique, caractérisé en ce que le procédé comprend les étapes consistant à :
déclencher (26) un appel téléphonique depuis l'ordinateur (16) à destination d'un serveur (14) connecté au réseau informatique (11), lequel serveur accède au central téléphonique par l'intermédiaire du réseau informatique ;
sélectionner (29), dans le central téléphonique, une première adresse de réseau informatique pour le central téléphonique ;
renvoyer (30) la première adresse depuis le central téléphonique (10) par l'intermédiaire du serveur (14) à l'ordinateur (16) ;
établir (31) une connexion entre le central téléphonique et l'ordinateur en utilisant la première adresse du central téléphonique en tant que destination pour la requête d'établissement d'appel, et en utilisant l'adresse de l'ordinateur (16) en tant qu'adresse de canal de trafic ; et
gérer, dans le central téléphonique (10), une interface (24) avec le réseau informatique (11, 12) l'interface convertissant des paquets de données et une suite de signaux téléphoniques destinés à l'appel entre l'ordinateur et un poste supplémentaire du central téléphonique (10), ladite étape de gestion comprenant la réception, dans le central téléphonique et en provenance de l'ordinateur (16), de paquets de données contenant des informations de téléphonie et ayant la première adresse, et l'extraction d'une structure de signal appropriée, à des fins de téléphonie sur le réseau informatique (11, 12), du contenu du paquet de données, pour envoyer des signaux téléphoniques depuis l'ordinateur (16) au central téléphonique (10), ainsi que l'application d'une structure de signal appropriée, à des fins de téléphonie sur le réseau informatique, à une suite de signaux de parole destinés à l'ordinateur afin de produire des paquets de données contenant des informations de téléphonie, laquelle structure de signal est reconnue par l'ordinateur (16), et l'envoi des paquets de données contenant les informations de téléphonie à l'ordinateur en utilisant l'adresse de réseau de l'ordinateur pour envoyer des signaux téléphoniques depuis le central téléphonique (10) à l'ordinateur (16).

2. Procédé selon la revendication 1, dans lequel l'étape de déclenchement (26) consiste à recevoir, dans le serveur (14) sur le réseau informatique (11, 12), une requête de service depuis l'ordinateur (16) par l'intermédiaire du réseau informatique et à envoyer au central téléphonique (10) une demande (28) d'adresse de réseau informatique au serveur (14), et dans lequel l'étape consistant à renvoyer (30) la première adresse consiste à envoyer la première adresse du central téléphonique à l'ordinateur par l'intermédiaire du serveur.

3. Procédé selon la revendication 2, dans lequel la requête de service (26) comprend un nom de destination et la sélection est effectuée conformément à des critères de sélection prédéterminés comprenant le nom de la destination, l'emplacement du poste à connecter, le nombre d'autres ordinateurs connectés au central téléphonique et des adresses non utilisées pendant longtemps.

4. Procédé selon la revendication 1, dans lequel l'étape consistant à appliquer (74) une structure de signal est précédée d'une étape consistant à comprimer (72) les signaux téléphoniques à envoyer.

5. Procédé selon la revendication 1, dans lequel l'étape de sélection (29) consiste à également à sélectionner un numéro de port qui est renvoyé à l'ordinateur (16) et est utilisé pendant l'établissement d'une connexion.

6. Procédé selon la revendication 1, dans lequel le central téléphonique (10) comprend un certain nombre de dispositifs de connexion en réseau (44, 46) auxquels des ordinateurs peuvent être connectés et dans lequel l'étape de sélection (29) consiste à sélectionner la première adresse dans un groupe d'adresses associé à un dispositif de connexion en réseau du central téléphonique à destination duquel la connexion téléphonique est établie.

7. Procédé selon la revendication 6, dans lequel la première adresse est directement associée à un poste ou à un groupe de postes du central téléphonique (10) par l'intermédiaire d'une identité de poste.

8. Procédé selon la revendication 1, dans lequel le central téléphonique (10) comprend un certain nombre de dispositifs de connexion au réseau (44, 46) auxquels des ordinateurs peuvent être connectés et dans lequel l'étape consistant à sélectionner (29) la première adresse consiste à sélectionner la première adresse dans un groupe d'adresses communes à tous les dispositifs de connexion au réseau du central téléphonique et à associer la première adresse au dispositif de connexion au réseau (46) du central téléphonique (10) à destination duquel la connexion téléphonique est établie.

9. Procédé selon la revendication 1, comprenant l'étape consistant à convertir l'adresse de réseau informatique de l'ordinateur (16) en un numéro de téléphone à utiliser pour appeler l'ordinateur.

10. Procédé selon la revendication 9, comprenant l'étape supplémentaire consistant à stocker le numéro de téléphone de l'ordinateur (16) pour une utilisation ultérieure lors d'un appel de l'ordinateur.

11. Procédé selon la revendication 1, comprenant l'étape supplémentaire consistant à déterminer, dans le central téléphonique (10), une structure de signal appropriée à des fins de téléphonie par l'intermédiaire du réseau informatique (11, 12) utilisé par l'ordinateur (16).

12. Central téléphonique (10) destiné à établir une connexion téléphonique à destination d'au moins un ordinateur (16) par l'intermédiaire d'un réseau informatique (11, 12) auquel est connecté l'ordinateur, un serveur de réseau (14) étant connecté au réseau informatique et le central téléphonique comprenant un noyau de commutation (40) et un moyen de commande de commutation (42) responsable de l'établissement de connexions entre des utilisateurs du central téléphonique, dans lequel l'ordinateur (16) comprend des moyens pour traiter la parole en temps réel afin qu'il ait une fonction de téléphone et possède une adresse de réseau informatique, caractérisé en ce que le central téléphonique (10) comprend :
des moyens (32) pour sélectionner des adresses de réseau lors du déclenchement d'un appel téléphonique depuis l'ordinateur (16) vers le serveur (14), lequel accède au central téléphonique par l'intermédiaire du réseau informatique (11, 12) afin de sélectionner une première adresse de réseau informatique avec laquelle une connexion téléphonique doit être établie ;
au moins un moyen de traitement de signaux (24) conçu pour renvoyer la première adresse depuis le central téléphonique (10) par l'intermédiaire du serveur à l'ordinateur (16) ; et
un moyen (42) pour établir une connexion avec l'ordinateur en utilisant la première adresse du central téléphonique en tant que destination de la requête d'établissement d'appel et en utilisant l'adresse de l'ordinateur (16) en tant qu'adresse de canal de trafic ;
dans lequel le moyen de traitement de signaux (24) est en outre conçu pour gérer une interface avec le réseau informatique (11, 12), l'interface convertissant des paquets de données et une suite de signaux téléphoniques pour un appel entre l'ordinateur et un poste du central téléphonique, dans lequel le moyen de traitement de signaux (24) est également conçu, lors de la gestion de l'interface, pour recevoir des paquets de données de l'ordinateur (16) contenant des informations de téléphonie et ayant ladite première adresse et pour retirer une structure de signal appropriée pour une fonction de téléphonie sur le réseau informatique (11, 12) du contenu des paquets de données, afin de produire une suite de signaux de parole destinés audit poste, ainsi que pour appliquer une structure de signal appropriée pour une fonction de téléphonie sur le réseau informatique (11, 12) à une suite de signaux de parole destinés à l'ordinateur (16) afin de produire des paquets de données contenant des informations de téléphonie, laquelle structure de signal est reconnue par l'ordinateur ; et pour envoyer les paquets de données contenant des informations de téléphonie à l'ordinateur (16) en utilisant l'adresse de réseau informatique de l'ordinateur.

13. Central téléphonique selon la revendication 12, dans lequel le moyen de traitement de signaux (24) est conçu pour recevoir une demande d'adresse de réseau informatique devant être utilisée pour une connexion téléphonique avec l'ordinateur (16) depuis le serveur (14) sur le réseau informatique (11, 12), lequel serveur a reçu une requête de service de l'ordinateur (16), et pour renvoyer la première adresse au serveur, afin que le serveur puisse envoyer la première adresse à l'ordinateur.

14. Central téléphonique selon la revendication 13, dans lequel la demande comprend le nom d'une destination et le moyen de sélection d'adresses de réseau (32) est conçu pour sélectionner la première adresse conformément à des critères de sélection prédéterminés, lesquels critères de sélection prédéterminés comprennent le nom de la destination, l'emplacement du poste à connecter, le nombre d'autres ordinateurs connectés au central téléphonique et des adresses non utilisées pendant longtemps.

15. Central téléphonique selon la revendication 12, dans lequel le moyen de sélection d'adresses de réseau (32) est également conçu pour sélectionner un numéro de port lors de la sélection de la première adresse, qui est renvoyé à l'ordinateur (16) et est utilisé pendant l'établissement d'une connexion.

16. Central téléphonique selon la revendication 12, dans lequel le central téléphonique (10) comprend au moins deux dispositifs de connexion au réseau (44, 46), comprenant chacun un moyen de traitement de signaux (24) et au moins un moyen de mise en forme de signaux (22), le moyen de mise en forme de signaux étant connecté entre le noyau de commutation (40) et le moyen de traitement de signaux, et étant conçu pour comprimer les signaux téléphoniques à envoyer.

17. Central téléphonique selon la revendication 16, dans lequel le moyen de sélection d'une adresse de réseau est conçu pour sélectionner la première adresse dans un groupe d'adresses associées à un dispositif de connexion au réseau (46) du central téléphonique (10) à destination duquel la connexion téléphonique doit être établie.

18. Central téléphonique (10) selon la revendication 17, dans lequel le moyen de commande de commutation (42) est conçu pour associer la première adresse à une identité de poste d'un poste ou d'un groupe de postes du central téléphonique.

19. Central téléphonique selon la revendication 16, dans lequel le dispositif de connexion au réseau (44) avec lequel la connexion téléphonique est établie comprend une mémoire de poste contenant au moins une identité d'un poste ou d'un groupe de postes du central téléphonique (10), dans lequel chacune de ces identités de postes est directement associée à une adresse de réseau informatique correspondante.

20. Central téléphonique selon la revendication 16, dans lequel le moyen destiné à sélectionner (32) une adresse de réseau est conçu pour sélectionner la première adresse dans un groupe d'adresses communes à tous les dispositifs de connexion au réseau (44, 46) du central téléphonique (10) et pour associer la première adresse au dispositif de connexion au réseau du central téléphonique à destination duquel la connexion téléphonique doit être établie.

21. Central téléphonique selon la revendication 16, dans lequel le dispositif de connexion en réseau (46) auquel l'ordinateur (16) doit être connecté comprend des moyens pour convertir l'adresse de réseau informatique de l'ordinateur en un numéro de téléphone devant être utilisé pour appeler l'ordinateur.

22. Central téléphonique (10) selon la revendication 21, dans lequel le moyen de conversion de l'adresse de réseau est conçu pour retransmettre le numéro de téléphone de l'ordinateur (16) au moyen de commande de commutation (42), qui est lui-même conçu pour stocker le numéro de téléphone de l'ordinateur en vue d'une utilisation ultérieure lors d'un appel de l'ordinateur ou pour un affichage sur un poste appelé.

23. Central téléphonique (10) selon la revendication 16, dans lequel le moyen de sélection (32) d'une adresse de réseau comprend un moyen pour déterminer la structure de signal appropriée pour une fonction de téléphonie sur le réseau informatique (11, 12) utilisé par l'ordinateur (16), lequel moyen de sélection (32) d'adresse de réseau est en outre conçu pour indiquer cette structure au dispositif de connexion au réseau (44, 46) auquel l'ordinateur doit être connecté.

24. Central téléphonique selon la revendication 12, dans lequel le moyen de sélection (34) d'adresse de réseau se trouve dans le moyen de commande de commutation (20).

25. Central téléphonique selon la revendication 16, dans lequel le moyen de sélection (34) d'adresse de réseau se trouve dans un dispositif de connexion au réseau (44).

26. Système téléphonique pour établir des connexions téléphoniques entre au moins un ordinateur (16) et un central téléphonique (10) par l'intermédiaire d'un réseau informatique (11, 12) et comprenant un serveur (14) et un central téléphonique qui comprend un noyau de commutation (40) et un moyen de commande de commutation (42) responsable de l'établissement de connexions entre des utilisateurs du central téléphonique (10), dans lequel l'ordinateur comprend des moyens pour traiter la parole,en temps réel afin de fonctionner en tant que téléphone, et possède une adresse de réseau informatique ;
caractérisé en ce que le serveur (14) est conçu pour recevoir une requête de service dudit ordinateur (16) par l'intermédiaire du réseau informatique (11, 12), afin d'envoyer au central téléphonique (10) une demande d'adresse de réseau informatique, pour recevoir depuis le central téléphonique une première adresse devant être utilisée par l'ordinateur et pour envoyer ladite première adresse à l'ordinateur (16) ; en ce que le central téléphonique (10) comprend :
des moyens pour sélectionner (32) des adresses de réseau, afin de sélectionner ladite première adresse de réseau informatique avec laquelle la connexion téléphonique doit être établie ;
au moins un moyen de traitement de signaux (24) prévu pour renvoyer la première adresse à l'ordinateur (16) ; et
des moyens pour établir une connexion avec l'ordinateur en utilisant la première adresse du central téléphonique et l'adresse de l'ordinateur ;
dans lequel le moyen de traitement de signaux (24) est en outre conçu pour gérer une interface avec le réseau informatique (11, 12), l'interface convertissant des paquets de données et une suite de signaux téléphoniques destinés à un appel entre l'ordinateur (16) et un poste du central téléphonique (10), dans lequel le moyen de traitement de signaux (24) est également conçu, lors de la gestion de l'interface, pour recevoir des paquets de données de l'ordinateur (16) contenant des informations de téléphonie et ayant ladite première adresse et pour retirer une structure de signal appropriée pour une fonction de téléphonie sur le réseau informatique (11, 12) du contenu des paquets de données afin de produire une suite de signaux de parole destinés audit poste, ainsi que pour appliquer une structure de signal appropriée pour une fonction de téléphonie sur le réseau informatique (11, 12) à une suite de signaux de parole destinés à l'ordinateur (16) afin de produire des paquets de données contenant des informations de téléphonie, laquelle structure de signal est reconnue par l'ordinateur ; et pour envoyer les paquets de données contenant des informations de téléphonie à l'ordinateur (16) en utilisant l'adresse de réseau informatique de l'ordinateur.
